# EUROPÄISCHE PATENTANMELDUNG

(11) **EP 1 625 966 A2**
(43) Veröffentlichungstag der Anmeldung: **15.02.2006**
(21) Anmeldenummer: 05014363.5
(22) Anmeldetag: 01.07.2005
(51) Int. Cl.: B60N 2/02, B60N 2/30

(54) **Fahrzeugsitz mit Bodenstellung**

(30) Priorität: 13.08.2004 DE 102004039249
(71) Anmelder: KEIPER GmbH & Co. KG, 67657 Kaiserslautern (DE)
(72) Erfinder: Kämmerer, Joachim, 67663 Kaiserslautern (DE)
(74) Vertreter: Patentanwälte Hosenthien-Held und Dr. Held

(57) **Zusammenfassung**

Bei einem Fahrzeugsitz (1), insbesondere einem Kraftfahrzeugsitz, mit wenigstens einem vorderen Fuß (11), wenigstens einem am vorderen Fuß (11) angelenkten hinteren Fuß (21), einem wenigstens am vorderen Fuß (11) angelenkten Sitzkissen (3), einer am hinteren Fuß (21) angelenkten Lehne (5), und einer Kopplung zwischen dem Sitzkissen (3) und der Lehne (5), wobei der Fahrzeugsitz (1) zumindest von wenigstens einer zur Personenbeförderung geeigneten Gebrauchsstellung in eine zusammengeklappte Bodenstellung überführbar ist, sind als Kopplung zwischen dem Sitzkissen (3) und der Lehne (5) wenigstens zwei gelenkig miteinander verbundene Getriebeglieder (41, 45) vorgesehen, von denen wenigstens eines mittels eines Mittelgelenks (43) am hinteren Fuß (21) angelenkt ist.

## Beschreibung

Die Erfindung betrifft einen Fahrzeugsitz, insbesondere einen Kraftfahrzeugsitz, mit den Merkmalen des Oberbegriffs des Anspruches 1.

Die zweiten und/oder dritten Sitzreihen von Multifunktionsfahrzeugen (MPV), wie beispielsweise Vans oder Großraumlimousinen, sind in der Regel so ausgestaltet, dass der Innenraum variabel auf einen Personen- oder Gütertransport einstellbar ist. Aus der WO 02/22391 A1 ist beispielsweise ein Fahrzeugsitz der eingangs genannten Art bekannt, der aus einer Gebrauchsstellung in eine zum Einstieg geeignete Stellung oder in eine zusammengeklappte Bodenstellung zur Vergrößerung des Laderaums überführbar ist. Dabei ist zwischen dem Sitzkissen und der Lehne eine Koppel vorgesehen.

Der Erfindung liegt die Aufgabe zu Grunde, eine Alternative zum Fahrzeugsitz der eingangs genannten Art zu schaffen. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, dass als Kopplung zwischen dem Sitzkissen und der Lehne wenigstens zwei gelenkig miteinander verbundene Getriebeglieder vorgesehen sind, von denen wenigstens eines mittels eines Mittelgelenks am hinteren Fuß angelenkt ist, kann eine optimale Anpassung der Kopplung an eine vorgegebene Geometrie erfolgen, bei der zugleich die bei einer gekoppelten Bewegung von Lehne und Sitzkissen bestehenden Freiheitsgrade soweit reduziert werden, dass eine definierte Bewegung erfolgt.

Die für die Kopplung vorgesehenen Getriebeglieder bilden vorzugsweise Bestandteile von Viergelenken, die vorzugsweise eine Abfolge im Antrieb definieren, welche letztendlich bei einem Umklappen der Lehne nach vorne zu einem Absenken des Sitzkissens führt. Vorzugsweise ist dabei eine Schwinge als zweiarmiger Hebel ausgebildet, dessen verschiedene Arme verschiedenen Viergelenken angehören, was die Anzahl der Bauteile reduziert und die Montage sowie den Bewegungsablauf vereinfacht. Zur Steigung der Sitzkomforts ist die Lehne vorzugsweise neigungseinstellbar. Sofern die Lehne auch nach hinten geklappt werden kann, ermöglichen die gleichen Viergelenke, welche bei Umklappen der Lehne nach vorne zu einem Absenken des Sitzkissens führen, ein Anheben des Sitzkissens, vorzugsweise auf die gleiche Höhe wie die Lehne, um eine durchgängig gleich hohe Liegefläche zu erhalten.

Vorzugsweise ist der Fahrzeugsitz von der Gebrauchsstellung auch in eine Einstiegsstellung überführbar, was einen vielseitigen Einsatz in verschiedenen Sitzreihen ermöglicht, insbesondere auch in einer zweiten Sitzreihe neben einer Fahrzeugtüre. Damit in der Einstiegsstellung die Abmessung des zusammengefalteten Fahrzeugsitzes in Fahrzeuglängsrichtung möglichst gering ist, schwenkt der hintere Fuß nach vorne und aufgrund der Anlenkung am vorderen Fuß auch nach oben. Dabei klappt er vorzugsweise mittels der Schwinge das Sitzkissen am hinteren Ende hoch, so dass Sitzfläche und Lehnenfläche beide ungefähr nach vorne weisen. Durch ein Schloss oder dergleichen, welches vorzugsweise in der Gebrauchsstellung auch der basisfesten Verriegelung des hinteren Fußes dient, d.h. der Befestigung des hinteren Fußes am Fahrzeugboden, wird der hintere Fuß zur Sicherung vorzugsweise mit dem vorderen Fuß verriegelt.

Der Fahrzeugsitz weist vorzugsweise eine Entnahmefunktion auf, indem beispielsweise in der Einstiegsstellung jeweils der vordere Fuß ist oder in der Gebrauchsstellung alle Füße lösbar sind. Bei längseinstellbaren Fahrzeugsitzen lösen sich die Füße vorzugsweise von den Schienen, welche im Fahrzeug bleiben.

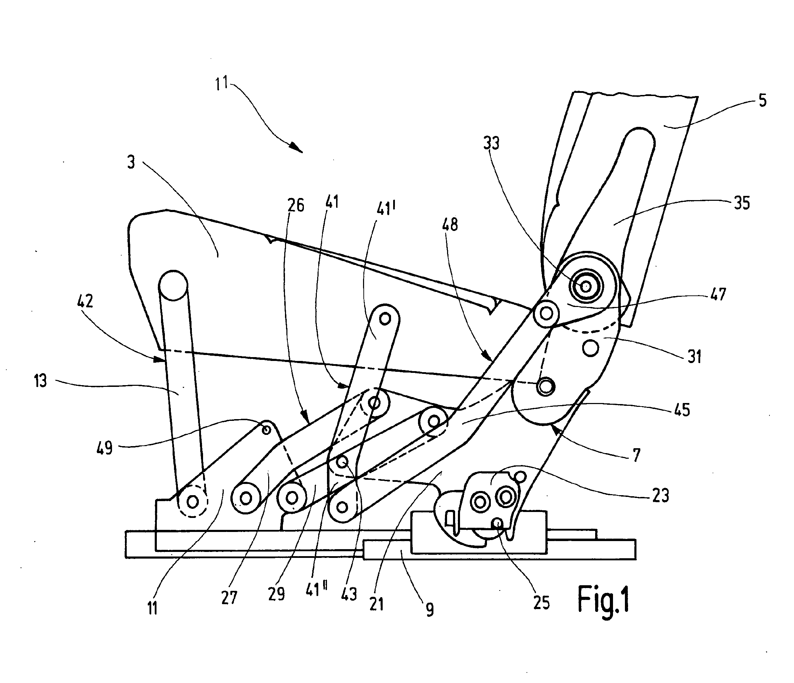

Im folgenden ist die Erfindung anhand eines in der Zeichnung dargestellten Ausführungsbeispiels näher erläutert. Es zeigen
- Fig. 1: eine teilweise geschnitten dargestellte Seitenansicht des Ausführungsbeispiels in der Gebrauchsstellung,

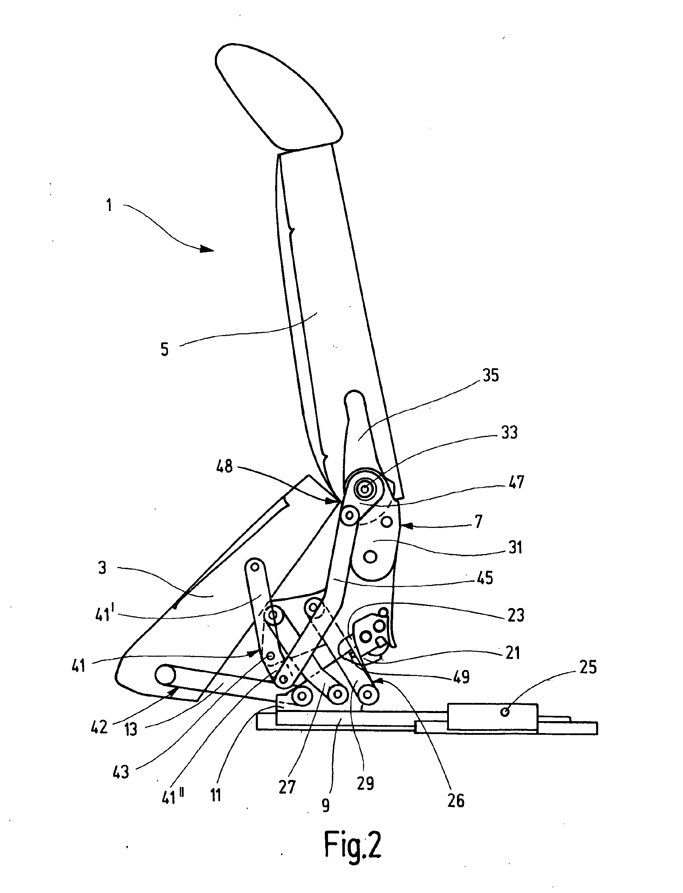

- Fig. 2: eine Fig. 1 entsprechende Darstellung in der Einstiegsstellung, und

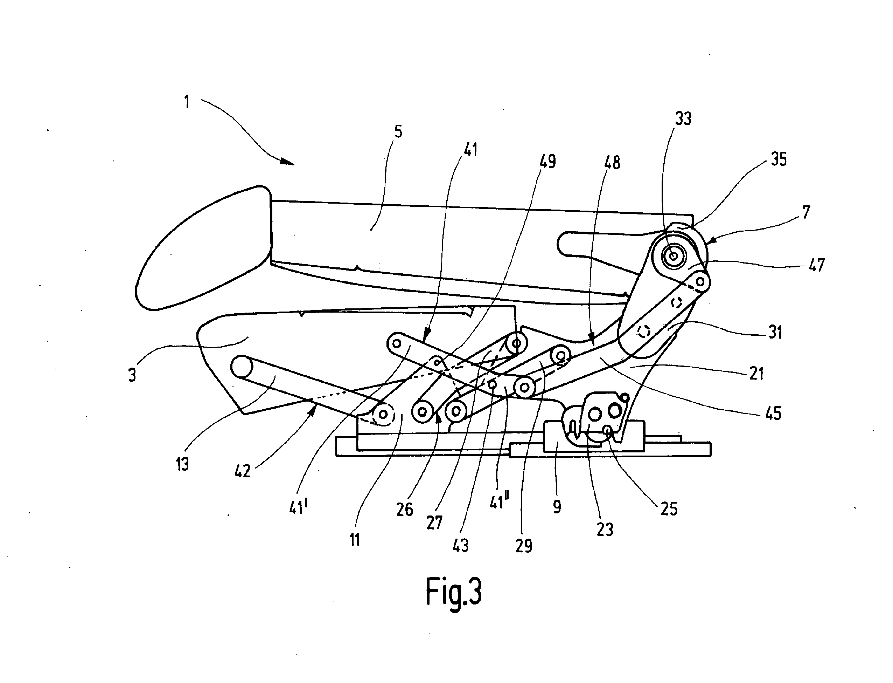

- Fig. 3: eine Fig. 1 entsprechende Darstellung in der Bodenstellung.

Ein Fahrzeugsitz 1 für eine mittlere oder hintere Sitzreihe eines Kraftfahrzeuges, beispielsweise eines Vans, weist ein Sitzkissen 3 und eine Lehne 5 auf, welche mittels Beschlägen 7 in ihrer Neigung relativ zum Sitzkissen 3 einstellbar ist. Bei den nachfolgenden Richtungsangaben wird davon ausgegangen, dass der Fahrzeugsitz 1 in Vorwärtsfahrtrichtung im Kraftfahrzeug angeordnet ist, wobei in einer zur Personenbeförderung geeigneten Gebrauchsstellung des Fahrzeugsitzes 1 sich die Lehne 5 am hinteren Ende des Sitzkissen 3 befindet. Unter dem Begriff Sitzkissen 3 soll die gesamte Baugruppe, bestehend aus einer Struktur und einem bezogenen Polster, verstanden werden. Soweit Bauteile am Sitzkissen 3 angelenkt sind, ist hierunter eine Anlenkung an der Struktur des Sitzkissens 3 zu verstehen.

Im folgenden wird der Einfachheit halber nur die linke Fahrzeugsitzseite des im wesentlichen symmetrischen Fahrzeugsitzes 1 beschrieben, und zwar zunächst in einer speziellen Gebrauchsstellung, nämlich der Designstellung, in welcher die Lehne 5 um beispielsweise 23° gegenüber der Vertikalen nach hinten geneigt ist. An einer mit der Struktur des Kraftfahrzeuges verbundenen Basis 9, vorliegend an einem Sitzschienenpaar, welches die Möglichkeit einer Längseinstellung des Fahrzeugsitzes 1 eröffnet, ist ein vorderer Fuß 11 angebracht, vorzugsweise mittels eines Schlosses oder dergleichen lösbar angebracht. Am vorderen Fuß 11 ist mittels einer vorderen Schwinge 13 das Sitzkissen 3 angelenkt, wobei diese vordere Schwinge 13 an beiden Seiten mit Gelenken versehen ist, von denen eines die Anlenkung am vorderen Fuß 11 und das andere die Anlenkung am vorderen Ende des Sitzkissens 3 bildet.

An der Basis 9 ist ferner in Fahrtrichtung hinter dem vorderen Fuß 11 ein hinterer Fuß 21 angeordnet, welcher lösbar mit der Basis 9 (basisfest) verriegelt ist, indem ein am hinteren Fuß 21 angebrachtes Schloss 23 mit einem basisfesten Befestigungsbolzen 25 lösbar verriegelt ist. Zudem ist der hintere Fuß 21 mittels eines Hinterfuß-Viergelenks 26 am vorderen Fuß 11 angelenkt. Die vier Getriebeglieder des Hinterfuß-Viergelenks 26 sind ein erster Lenker 27, ein in Fahrtrichtung hinter dem ersten Lenker 27 angeordneter zweiter Lenker 29, die jeweils an beiden Enden Gelenke aufweisen, der vordere Fuß 11 und der hintere Fuß 21. Am hinteren Fuß 21 ist auch das Beschlagunterteil 31 des Beschlages 7 angebracht, während das relativ zum Beschlagunterteil 31 um die Lehnenschwenkachse 33 schwenkbare und mit diesem verriegelbare Beschlagoberteil 35 des Beschlages 7 an der Lehne 5 befestigt ist.

Eine hintere Schwinge 41 ist als zweiarmiger Hebel ausgebildet und mittels eines zwischen den beiden Armen befindlichen Mittelgelenks 43 direkt am hinteren Fuß 21 angelenkt. Der in der Gebrauchsstellung nach oben weisende, längere, erste Arm 41' der hinteren Schwinge 41 ist an seinem Ende am Sitzkissen 3 angelenkt, und zwar dem hinteren Ende des Sitzkissens 3 zu, etwa bei zwei Dritteln der von vorne gemessenen Länge des Sitzkissens 3. Die Basis 9 mit den Füßen 11 und 21, die beiden Schwingen 13 und 41 und das Sitzkissen 3 definieren als vier Getriebeglieder ein Kissen-Viergelenk 42. An dem in der Gebrauchsstellung nach unten weisenden, kürzeren, zweiten Arm 41" der hinteren Schwinge 41 ist mittels eines weiteren Gelenkes eine Koppel 45 mit einem Ende angelenkt, welche an ihrem anderen Ende mittels eines dortigen Gelenkes an einem dritten Arm 47 angelenkt ist, welcher drehfest mit dem Beschlagoberteil 35 verbunden ist. In abgewandelter Ausführung könnte die Koppel 45 auch an einem anderen Teil der Lehne 5 angelenkt sein.

Bei der Neigungseinstellung der Lehne 5 wird auf jeder Fahrzeugsitzseite der Beschlag 7 entriegelt, die Lehne 5 um die Lehnenschwenkachse 33 in die gewünschte Stellung geschwenkt, und dann jeder Beschlag 7 wieder verriegelt. Der hintere Fuß 21 mit dem Beschlagunterteil 31, der dritte Arm 47, die Koppel 45 und der zweite Arm 41" bilden dabei als vier Getriebeglieder ein Koppel-Viergelenk 48, welches die hintere Schwinge 41 zu einer Schwenkbewegung um das Mittelgelenk 43 zwingt, also das Kissen-Viergelenk 42 bewegt. Dadurch ändert sich auch die Neigung des Sitzkissens 3, und zwar beim Vorschwenken der Lehne 5 zunächst steiler und beim Zurückschwenken der Lehne 5 flacher.

Zum Überführen des Fahrzeugsitzes 1 in eine Einstiegsstellung als eine ausgezeichnete Nichtgebrauchsstellung wird beidseitig der hintere Fuß 21 entriegelt, genauer gesagt dessen Schloss 23, so dass letzteres den Befestigungsbolzen 25 freigibt. Der hintere Fuß 21 schwenkt nun mittels des Hinterfuß-Viergelenks 26, d.h. der Lenker 27 und 29, nach oben und vorne. Diese Schwenkbewegung des hinteren Fußes 21 um den vorderen Fuß 11 ist genau betrachtet eine Überlagerung mehrere Schwenkbewegungen der beteiligten Bauteile um die Anlenkstellen des Hinterfuß-Viergelenks 26. Der Beschlag 7 bleibt jeweils verriegelt. Dadurch sind die Koppel 45 und infolge dessen auch die hintere Schwinge 41 in starrer Anordnung relativ zum hinteren Fuß 21. Der hintere Fuß 21 drückt daher mit der hinteren Schwinge 41 das Sitzkissen 3 am hinteren Ende nach oben, welches aufgrund seiner Anlenkung mittels der vorderen Schwinge 13 am vorderen Ende nach unten schwenkt, insgesamt also mit der Sitzfläche voraus sich aufrichtet. Die Lehne 5 hingegen neigt sich leicht nach vorne. Wenn die Einstiegsstellung erreicht ist, in welcher der Zugang zu einer hinteren Sitzreihe erleichtert ist, verriegelt das Schloss 23 oder eine andere Klinkenanordnung mit einem Sicherungsbolzen 49 des vorderen Fußes 11, d.h. der hintere Fuß 21 und der vordere Fuß 11 sind miteinander verriegelt. Die Rückkehr in die zuvor eingenommene Gebrauchsstellung erfolgt nach dem Lösen der besagten Verriegelung zwischen den Füßen 11 und 21 in umgekehrter Reihenfolge der beschriebenen Schritte. Alternativ kann in der Einstiegsstellung beidseitig der vordere Fuß 11 gelöst und der Fahrzeugsitz 1 als Ganzes entnommen werden.

Zum Überführen des Fahrzeugsitzes 1 in eine Bodenstellung (Flat-Floor-Position) als einer weiteren ausgezeichneten Nichtgebrauchsstellung, in welcher ein vergrößerter Laderaum zur Verfügung steht, wird die Lehne 5 nach Entriegeln des Beschlags 7 nach vorne geklappt. Wie bei der Neigungseinstellung zwingt das Koppel-Viergelenk 48 die hintere Schwinge 41 zu einer Schwenkbewegung um das Mittelgelenk 43 und bewegt damit das Kissen-Viergelenk 42 und stellt zunächst das Sitzkissen 3 steiler. Die Koppel 45 durchläuft aber nun einen Totpunkt, in welchem die Gelenke der Koppel 45 und die Lehnenschwenkachse 33 auf einer Linie liegen, wonach das Koppel-Viergelenk 48 durch Bewegen der hinteren Schwinge 41 nach vorne beginnt, das Kissen-Viergelenk 42 und damit das Sitzkissen 3 abzusenken. Mit der Annäherung an die Bodenstellung, in welcher die Rückseite der Lehne 5 sich wenigstens näherungsweise in der Horizontalen befindet, legt sich die Lehne 5 auf das Sitzkissen 3. Die Sicherung dieser zusammengeklappten Bodenstellung erfolgt durch Verriegeln des Beschlags 7. Die Rückkehr in die zuvor eingenommene Gebrauchsstellung erfolgt nach dem Entriegeln des Beschlags 7 in umgekehrter Reihenfolge der beschriebenen Schritte.

### Bezugszeichenliste

- 1: Fahrzeugsitz
- 3: Sitzkissen
- 5: Lehne
- 7: Beschlag
- 9: Basis
- 11: vorderer Fuß
- 13: vordere Schwinge
- 21: hinterer Fuß
- 23: Schloss
- 25: Befestigungsbolzen
- 26: Hinterfuß-Viergelenk
- 27: erster Lenker
- 29: zweiter Lenker
- 31: Beschlagunterteil
- 33: Lehnenschwenkachse
- 35: Beschlagoberteil
- 41: hintere Schwinge
- 41': erster Arm
- 41": zweiter Arm
- 42: Kissen-Viergelenk
- 43: Mittelgelenk
- 45: Koppel
- 47: dritter Arm
- 48: Koppel-Viergelenk
- 49: Sicherungsbolzen

## Patentansprüche

1. Fahrzeugsitz, insbesondere Kraftfahrzeugsitz, mit wenigstens einem vorderen Fuß (11), wenigstens einem am vorderen Fuß (11) angelenkten hinteren Fuß (21), einem wenigstens am vorderen Fuß (11) angelenkten Sitzkissen (3), einer am hinteren Fuß (21) angelenkten Lehne (5), und einer Kopplung zwischen dem Sitzkissen (3) und der Lehne (5), wobei der Fahrzeugsitz (1) zumindest von wenigstens einer zur Personenbeförderung geeigneten Gebrauchsstellung in eine zusammengeklappte Bodenstellung überführbar ist, **dadurch gekennzeichnet, dass** als Kopplung zwischen dem Sitzkissen (3) und der Lehne (5) wenigstens zwei gelenkig miteinander verbundene Getriebeglieder (41, 45) vorgesehen sind, von denen wenigstens eines mittels eines Mittelgelenks (43) am hinteren Fuß (21) angelenkt ist.

2. Fahrzeugsitz nach Anspruch 1, **dadurch gekennzeichnet, dass** wenigstens eines der vorgesehenen Getriebeglieder eine Koppel (45) ist, die einen Teil eines Koppel-Viergelenk (48) bildet, welches beim Übergang von der Gebrauchsstellung in die Bodenstellung von der Lehne (5) angetrieben wird.

3. Fahrzeugsitz nach Anspruch 1 oder 2, **dadurch gekennzeichnet, dass** wenigstens eines der vorgesehenen Getriebeglieder eine am Sitzkissen (3) angelenkte Schwinge (41) ist, die einen Teil eines Kissen-Viergelenks (42) bildet.

4. Fahrzeugsitz nach Anspruch 2 und 3, **dadurch gekennzeichnet, dass** das von der Lehne (5) angetriebene Koppel-Viergelenk (48) das Kissen-Viergelenk (42) antreibt, welches das Sitzkissen (3) absenkt.

5. Fahrzeugsitz nach Anspruch 3 oder 4, **dadurch gekennzeichnet, dass** die Schwinge (41) als zweiarmiger Hebel ausgebildet ist, von dem ein erster Arm (41') den Teil des Kissen-Viergelenks (42) und ein zweiter Arm (41") einen Teil des Koppel-Viergelenks (48) bildet.

6. Fahrzeugsitz nach Anspruch 5, **dadurch gekennzeichnet, dass** das Mittelgelenk (43) zwischen den beiden Armen (41', 41") vorgesehen ist.

7. Fahrzeugsitz nach einem der Ansprüche 1 bis 6, **dadurch gekennzeichnet, dass** der hintere Fuß (21) mittels eines Hinterfuß-Viergelenks (26) am vorderen Fuß angelenkt ist.

8. Fahrzeugsitz nach einem der Ansprüche 1 bis 7, **dadurch gekennzeichnet, dass** der Fahrzeugsitz (1) von der Gebrauchsstellung in eine Einstiegsstellung überführbar ist.

9. Fahrzeugsitz nach Anspruch 8, **dadurch gekennzeichnet, dass** beim Überführen des Fahrzeugsitzes (1) in die Einstiegsstellung der hintere Fuß (21) nach vorne geschwenkt wird.

10. Fahrzeugsitz nach einem der Ansprüche 3 bis 6 und nach Anspruch 9, **dadurch gekennzeichnet, dass** der hintere Fuß (21) mittels der Schwinge (41) das Sitzkissen (3) am hinteren Ende hochklappt.
